# EUROPÄISCHE PATENTSCHRIFT

(11) **EP 1 182 005 B1**
(45) Veröffentlichungstag und Bekanntmachung des Hinweises auf die Patenterteilung: **29.09.2004**
(21) Anmeldenummer: 01116778.0
(22) Anmeldetag: 20.07.2001
(51) Int. Cl.: B23Q 11/10, B23Q 11/00

(54) **Werkzeugmaschine mit einem Entsorgungssystem für Späne und Flüssigkeit**
Machine tool with a disposal system for chips and fluids
Machine-outil avec un système d'évacuation de copeaux et de fluide

(30) Priorität: 23.08.2000 DE 10041355
(43) Veröffentlichungstag der Anmeldung: 27.02.2002
(73) Patentinhaber: DECKEL MAHO Pfronten GmbH, 87459 Pfronten (DE)
(72) Erfinder: Hoppe, Gerd, 34317 Habichtswald (DE); Geissler, Alfred, 87459 Pfronten (DE); Lechleiter, Karl, 87466 Oy-Mittelberg (DE)
(74) Vertreter: Beetz & Partner Patentanwälte

(56) Entgegenhaltungen:
- PATENT ABSTRACTS OF JAPAN vol. 012, no. 292 (M-729), 10. August 1988 (1988-08-10) & JP 63 068338 A (N I SHI OOTOTETSUKU KK), 28. März 1988 (1988-03-28)

## Beschreibung

Die Erfindung betrifft eine Werkzeugmaschine zur spanenden Metallbearbeitung mit einem unter dem Arbeitsbereich angeordneten Entsorgungssystem für Späne und Flüssigkeit, das eine Wanne mit einer Querrinne, einen in der Querrinne angeordneten Späneförderer mit einem wendelförmigen Förderelement, einen Flüssigkeits-Sammler an der einen Seitenwand der Wanne und einen an ihrer anderen Seitenwand am Austragsende des Späneförderers angeordneten Späneaustrag enthält.

Neue Maschinenkonzepte, der vermehrten Einsatz von Hochgeschwindigkeits-Arbeitsspindeln und die Entwicklung verbesserter Spanwerkzeuge führte in der letzten Zeit zu einem rasanten Anstieg der Spanleistung moderner Werkzeugmaschinen, was einen entsprechend erhöhten Anfall an Spänen und auch an Spülund Kühlflüssigkeiten zur Folge hatte. Darüber hinaus hat sich insbesondere durch die sehr viel höheren Schnittgeschwindigkeiten bei dem Einsatz von Hochgeschwindigkeits-Arbeitsspindeln auch die Struktur der Späne geändert. Aus diesen Faktoren resultierten höhere Anforderungen an die Entsorgungssysteme für die Späne und die Flüssigkeiten. Insbesondere bei der Bearbeitung von Leichtmetall-Werkstücken mit Hochgeschwindigkeits-Arbeitsspindeln fallen große Mengen an Spänen an, die zusammen mit den entsprechend vergrößerten Mengen an Spül- und Kühlflüssigkeit in der unter dem Arbeitsbereich der Maschine vorgesehenen Wanne aufgefangen werden.

Es ist bereits ein Entsorgungssystem für Späne und Flüssigkeiten an einer Werkzeugmaschine entwickelt worden, das eine unter dem Arbeitsbereich der Werkzeugmaschine vorgesehene Wanne mit geneigtem Boden als Auffangbehälter für die anfallenden Späne und Flüssigkeiten aufweist. Diese Wanne besitzt im Anschlußbereich an den Ständer bzw. das Bett der Maschine eine querverlaufende Rinne, in welcher ein aus einer schraubenförmigen Wendel bestehendes Förderelement umläuft, welches die in der Rinne gesammelten Späne zu einem in der einen Wannenwand vorgesehenen Späneaustrag hin fördert. Die in der Wanne aufgefangene Flüssigkeit fließt durch einen in der anderen Wannenwand vorgesehenen Auslauf in einen darunter angeordneten Sammler, aus dem sie in üblicher Weise zur Aufbereitung und Reinigung abgezogen wird. Um einen unerwünschten Späneeintrag in diesen Sammler zu vermeiden, befindet sich im Auslaufbereich ein perforiertes Rohrstück, das den antriebsseitigen Teil der Rohrspindel mit geringem Spiel umgibt, so daß an der Innenwand dieses Rohrstückes abgelagerte Späne von der rotierenden Förderwendel mitgenommen werden. Bei extrem hohen Spanleistungen und ggf. intermettierendem Betrieb dieses Entsorgungssystems konnte eine Bildung von mit Flüssigkeit durchsetzten Spänehaufen nicht immer vermieden werden und es traten Verbackungs-Erscheinungen zwischen Flüssigkeitskomponenten und Spänen auf, die eine wirksame Entsorgung aller anfallender Substanzen behinderten und insbesondere auch Probleme beim Wiederanfahren nach längeren Stillstandszeiten bereiteten.

Aufgabe der Erfindung ist es, die Effektivität eines Entsorgungssystems für Späne und Flüssigkeiten einer Werkzeugmaschine zu steigern und eine verbesserte Abscheidung der Flüssigkeit auch bei extrem hohen Späneanfall zu erreichen.

Diese Aufgabe wird erfindungsgemäß dadurch gelöst, daß im Innenraum des wendelförmigen Förderelements ein langgestrecktes Siebelement angeordnet ist, das sich zumindest über eine Teillänge des Förderelements erstreckt und am Flüssigkeits-Sammler ausmündet.

Dieses zweckmäßigerweise als Siebrohr ausgebildete Siebelement verhindert, daß die Späne in den Innenraum der Förderwendel gelangen und von der in den Auslaß strömenden Flüssigkeit in den Sammler mitgenommen werden. Die sich zusammen mit den Spänen ablagernden Flüssigkeiten tropfen durch das Siebrohr hindurch, wodurch eine wirksame Abscheidung der Flüssigkeiten aus den Spänen erreicht wird und die Länge des Siebrohres eine ausreichend große Siebfläche gewährleistet.

Gemäß einer zweckmäßigen Ausgestaltung der Erfindung ist das Siebrohr mit der Förderwendel fest verbunden und zusammen mit dieser drehbar, wobei sein auslaufseitiges Ende in ein obehalb des Flüssigkeits-Sammlers angeordnetes perforiertes Rohrstück hineinragt, welches entweder außen an den Wendeln befestigt ist und mit rotiert oder aber ortsfest die Wendel umgibt. Im letzteren Fall werden die an der Innenwand des Rohrstücks und ggf. in den Perforationen anhaftenden Späne durch eine Rotationsbewegung der Wendel abgestreift.

Gemäß einer anderen Weiterbildung der Erfindung ist das Siebrohr undrehbar und nur mit geringem Spiel im Inneren der Förderwendel positioniert, so daß sich durch die Drehbewegung der Förderwendel ebenfalls ein Abstreifeffekt für ggf. anhaftende Späne ergibt. Bei dieser Ausführung kann das Siebrohr die Sieböffnungen nur in seinem oberen Bereich aufweisen, so daß die eintretende Flüssigkeit auf dem durchgehenden Bodenteil zum Auslauf hin abfließt. Zur drehfesten Halterung des Siebrohres sind an einem oder beiden Rohrenden zweckmäßig Stabelemente bzw. Achsen vorgesehen, die in einer oder auch beiden Seitenwänden der Wanne bzw. an einem anderen ortsfesten Bauteil befestigt sind und das Rohr im Inneren der Wendel zentriert haltern.

Weitere Besonderheiten und Vorzüge der Erfindung ergeben sich aus der folgenden Beschreibung eines bevorzugten Ausführungsbeispiels der Erfindung anhand der Zeichnung. Es zeigen:
- Fig. 1: einen Fahrständer einer spanenden Werkzeugmaschine mit dem erfindungsgemäßen Entsorgungssystem in perspektivischer Darstellung;
- Fig. 2: einen vergrößerten Ausschnitt aus Fig. 1 mit den funktionswesentlichen Bauteilen des Entsorgungssystems.

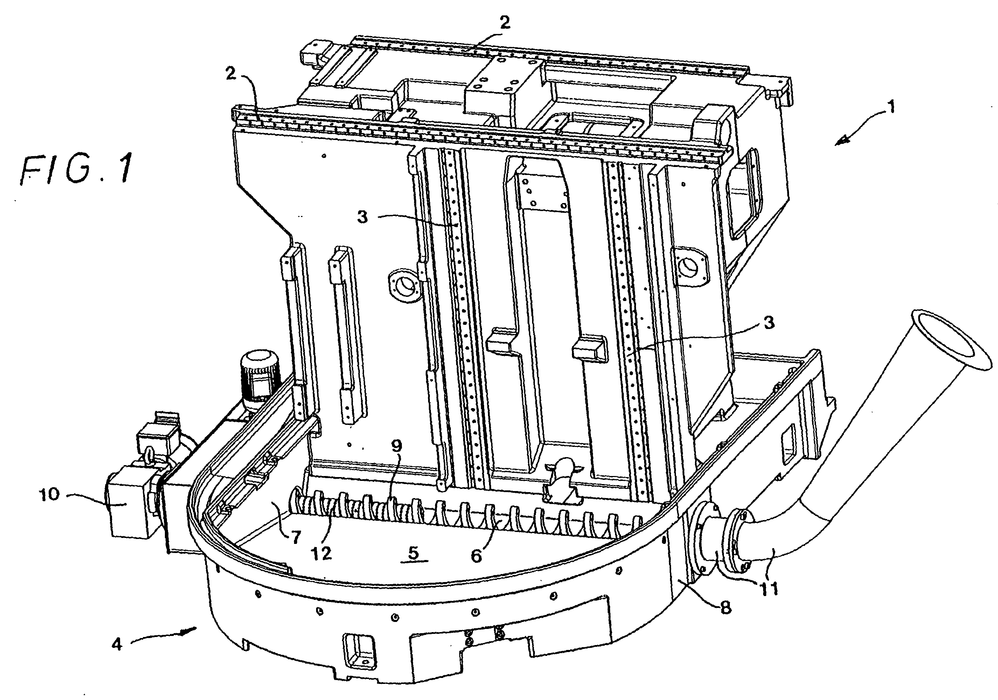

Der in Fig. 1 dargestellte Torso einer Werkzeugmaschine umfaßt einen sog. Fahrständer 1 mit horizontalen und vertikalen Führungsschienen 2, 3 zur Halterung und Führung von - nicht dargestellten - Maschinenaggregaten. Am unteren Teil dieses Fahrständers 1 befindet sich eine Wanne 4 zum Auffangen der im Spanbetrieb erzeugten Späne und der anfallenden Spül- und Kühlflüssigkeiten. Der Wannenboden 5 ist zu einer querverlaufenden Rinne 6 geneigt, die sich von einer Seitenwand 7 bis zur gegenüberliegenden Seitenwand 8 der Wanne 4 erstreckt. In dieser Rinne 6 ist eine Förderwendel 9 angeordnet, die einen Auslauf in der Seitenwand 7 durchragt und von einem seitlich angebauten Getriebemotor 10 gedreht wird. Das in Fig. 1 rechte Ende der Wendel 9 ist in der Seitenwand 8 unmittelbar vor einem Späneaustrag 11 gelagert, der in üblicher Weise aus Rohrstücken zusammengebaut ist. In dem von der Förderwendel 9 umgebenen Innenraum befindet sich ein Siebrohr 12, das beim dargestellten Ausführungsbeispiel etwa ein Drittel der Länge der Förderwendel hat.

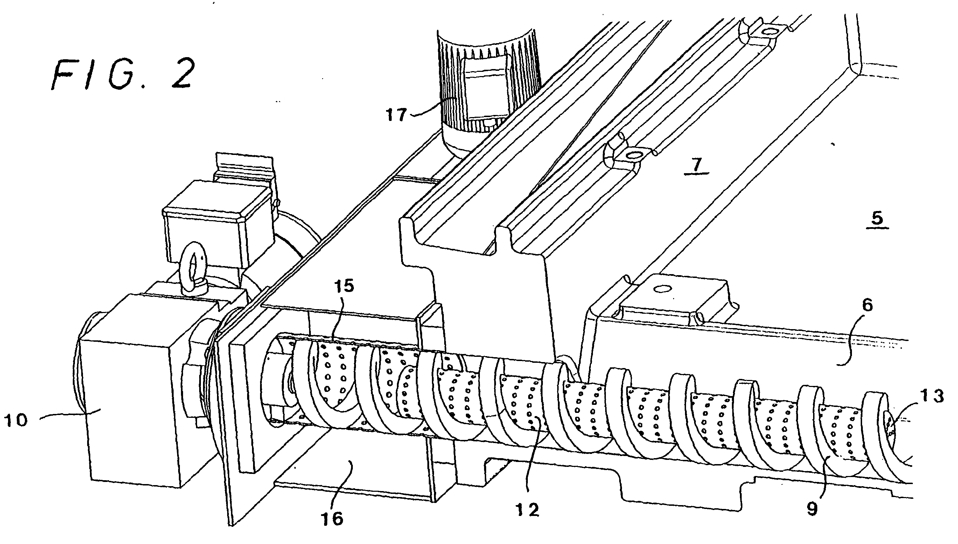

Wie aus Fig. 2 ersichtlich, ist das antriebsseitige Ende der Förderwendel 9 von einem perforierten Rohrstück 15 mit geringem Spiel umgeben, das sich oberhalb eines Flüssigkeitssammlers 16 befindet, aus dem die aufgefangene Flüssigkeit in üblicher Weise mittels einer Saugpumpe entfernt wird. Das Siebrohr 12 ragt auslaufseitig in das perforierte Rohrstück 15 hinein und endet oberhalb des Sammlers 16. Einlaufseitig ist das Siebrohr 12 durch eine Siebplatte 13 verschlossen.

Bei dem dargestellten Ausführungsbeispiel sind das perforierte Rohrstück 15 auf der Außenseite der Förderwendel 9 und das Siebrohr 12 an der Innenseite der Förderwendel z.B. durch Schweißen befestigt, so daß die beiden Rohrelemente 12 und 15 zusammen mit der Förderwendel 9 drehen.

Bei einem weiteren Ausführungsbeispiel der Erfindung können das perforierte Rohrstück 15 und/oder auch das Siebrohr 12 gegenüber der Förderwendel 9 drehfest positioniert sein, so daß sich durch die Drehbewegung der Förderwendel 9 Abstreifeffekte für die anhaftenden Späne ergeben. In diesem Fall braucht nur der Unterteil des Rohrstücks 15 mit Perforierungen versehen sein und Sieböffnungen sind nur im oberen Teil des Siebrohres 12 erforderlich, wobei dann der geschlossene Bodenbereich dieses Siebrohres 12 als Ablaufrinne für die Flüssigkeit dient. Zur drehfesten Halterung des Siebrohres 12 im Inneren der Förderwendel 9 kann z. B. an seiner einlaufseitigen Endplatte 13 ein formsteifes Verlängerungselement von geringem Duchmesser befestigt sein, das sich bis zur Seitenwand 8 erstreckt und hinter dem Ende der Förderwendel 9 an dieser Seitenwand 8 bzw. in deren Späneauslaß z. B. durch Radialstege befestigt ist. Das Verlängerungselement kann als Stange oder Rohr ausgebildet sein und einen möglichst geringen Durchmesser haben, um die Förderleistung der Förderwendel 9 nicht merklich zu vermindern.

## Patentansprüche

1. Werkzeugmaschine zur spanenden Metallbearbeitung mit einem unter dem Arbeitsbereich angeordneten Entsorgungssystem für Späne und Flüssigkeiten, das eine Wanne (4) mit einer Querrinne (6), einen in der Querrinne angeordneten Späneförderer mit einem wendelförmigen Förderelement (9), einem Flüssigkeits-Sammler (16) an der einen Seitenwand (7) der Wanne (4) und einen an ihrer anderen Seitenwand am Austragsende des Späneförderers angeordneten Späneaustrag (11) enthält,
**dadurch gekennzeichnet, daß**
im Innenraum des wendelförmigen Förderelements (9) ein langgestrecktes Siebelement (12) angeordnet ist, das sich zumindest über eine Teillänge des Förderelements (9) erstreckt und am Flüssigkeits-Sammler (16) ausmündet.

2. Werkzeugmaschine nach Anspruch 1,
**dadurch gekennzeichnet, daß**
das Siebelement ein Siebrohr (12) ist, das an seinem freien Ende eine ggf. mit Sieböffnungen versehene Deckplatte (13) aufweist.

3. Werkzeugmaschine nach Anspruch 2,
**dadurch gekennzeichnet, daß**
das Siebrohr (12) drehfest ist und mit geringem Spiel von der Förderwendel (9) umgeben ist.

4. Werkzeugmaschine nach Anspruch 3,
**dadurch gekennzeichnet, daß**
das Siebrohr (12) zumindest mit seinem einen Ende mittels eines Verlängerungselements in zumindest einer Seitenwand (7, 8) der Wanne (4) gehalten ist.

5. Werkzeugmaschine nach Anspruch 2,
**dadurch gekennzeichnet, daß**
das Siebrohr (12) drehbar und ggf. mit der Förderwendel (9) fest verbunden ist.

6. Werkzeugmaschine nach einem der Ansprüche 1 bis 5,
**dadurch gekennzeichnet, daß**
der eine Endbereich der Förderwendel (9) oberhalb des Sammlers (16) von einem zumindest in seinem unteren Bereich perforierten Rohrstück (15) umgeben ist, in welches das Siebrohr (12) hineinragt.

## Claims

1. Machine tool for metal cutting having a disposal system for chips and liquids disposed below the work area, which disposal system comprises a pan (4) provided with a transverse channel (6), a chip conveyor disposed in the transverse channel and comprising a spiral-shaped conveyor element (9), a liquid collector (16) disposed at the one side wall (7) of the pan (4) and a chip outlet (11) disposed at its other side wall at the outlet-end of the chip conveyor,
**characterised in that**
an elongated screen element (12) is disposed in the inner space of the spiral-shaped conveyor element (9), said screen element extending over at least a part of the length of the conveyor element (9) and terminating at the liquid collector (16).

2. Machine tool according to claim 1,
**characterised in that**
the screen element is a screen pipe (12) provided, at its free end, with a cover plate (13) which may optionally be provided with sieve openings.

3. Machine tool according to claim 2,
**characterised in that**
the screen pipe (12) is rotationally fixed and surrounded by the conveyor spiral (9) with little tolerance.

4. Machine tool according to claim 3,
**characterised in that**
at least one end of the screen pipe (12) is held in at least one side wall (7, 8) of the pan (4) by means of an extension element.

5. Machine tool according to claim 2,
**characterised in that**
the screen pipe (12) is rotatable and, if necessary, can be fixedly connected to the conveyor spiral (9).

6. Machine tool according to one of the claims 1 to 5,
**characterised in that**
the one end portion of the conveyor spiral (9), which is located above the collector (16), is surrounded by a tube portion (15) perforated at least in its lower part, the screen pipe (12) protruding into said tube portion (15).

## Revendications

1. Machine-outil pour l'usinage de métaux à enlèvement de copeaux avec un système d'évacuation de copeaux et de fluides disposé sous la zone de travail, système qui comprend une cuve (4) avec une rigole transversale (6), un transporteur de copeaux disposé dans la rigole transversale avec un élément de transport (9) hélicoïdal, un collecteur de fluide (16) situé sur une paroi latérale (7) de la cuve (4) et une évacuation de copeaux (11) disposée sur l'autre paroi latérale de la cuve à l'extrémité d'évacuation du transporteur de copeaux,
**caractérisée en ce que**
un élément de tamisage (12) allongé est disposé à l'intérieur de l'élément de transport (9) hélicoïdal, élément de tamisage qui s'étend au moins sur une longueur partielle de l'élément de transport (9) et qui débouche dans le collecteur de fluide (16).

2. Machine-outil selon la revendication 1,
**caractérisée en ce que**
l'élément de tamisage est un tuyau de tamisage (12) qui comporte à son extrémité libre une plaque de recouvrement (13) comportant le cas échéant des orifices de tamisage.

3. Machine-outil selon la revendication 2,
**caractérisée en ce que**
le tuyau de tamisage (12) est entouré par l'hélice de transport (9) de manière fixe et avec un faible jeu.

4. Machine-outil selon la revendication 3,
**caractérisée en ce que**
le tuyau de tamisage (12) est maintenu au moins par son extrémité au moyen d'un élément d'allongement dans au moins une paroi latérale (7, 8) de la cuve (4).

5. Machine-outil selon la revendication 2,
**caractérisée en ce que**
le tuyau de tamisage (12) est rotatif et le cas échéant relié à l'hélice de transport (9).

6. Machine-outil selon l'une des revendications 1 à 5,
**caractérisée en ce que** la zone terminale de l'hélice de transport (9) au-dessus du collecteur (16) est entourée d'une section de tuyau (15) perforé au moins dans sa zone inférieure, section de tuyau dans laquelle entre le tuyau de tamisage (12).
